# EUROPEAN PATENT APPLICATION

(11) **EP 4 640 037 A1**
(43) Date of publication of application: **29.10.2025**
(21) Application number: 25172021.5
(22) Date of filing: 23.04.2025
(51) Int. Cl.: A01F 15/07, A01F 15/08

(54) **TAKE-UP, TENSIONING OR SERPENTINE ARM WITH PIVOTING ROLL FOR AGRICULTURAL BALER**

(30) Priority: 23.04.2024 US 202418642899
(71) Applicant: CNH Industrial America LLC, New Holland, PA 17557 (US)
(72) Inventor: Hertzler, Todd, New Holland, 17557 (US)
(74) Representative: CNH Industrial IP Department

(57) **Abstract**

A take-up or serpentine arm assembly for an agricultural baler, which arm assembly is moveable between a first position corresponding to an empty bale chamber of the baler and a second position corresponding to an at least partially filled bale chamber of the baler. The arm assembly includes a primary arm having a first rotatable roll mounted thereto and a secondary arm having a second rotatable roll mounted thereto. The secondary arm is moveably connected to the primary arm, or vice versa, such that in the first position of the arm assembly, the second rotatable roll is positioned a first distance away from the first rotatable roll, and in the second position of the arm assembly, the second rotatable roll is positioned a second distance away from the first rotatable roll that is less than the first distance.

## Description

### FIELD OF THE INVENTION

The present invention pertains to agricultural balers and, more specifically, to agricultural balers with take-up, tensioning or serpentine arms.

### BACKGROUND OF THE INVENTION

In the case of hay, a mower-conditioner is typically used to cut and condition the crop material for windrow drying in the sun. In the case of straw, an agricultural combine discharges non-grain crop material from the rear of the combine defining the straw (such as wheat or oat straw) which is to be picked up by the baler. The cut crop material is typically raked and dried, and a baler, such as a large square baler or round baler, straddles the windrows and travels along the windrows to pick up the crop material and form it into bales.

A round baler may generally include a chassis, supported by wheels, a pickup unit to engage and lift the crop material into the baler, a cutting unit, a bale chamber for forming a bale, and a wrapping mechanism for wrapping or tying a material around the bale after it has been formed in the main bale chamber. As the baler is towed over a windrow, the pickup unit lifts the crop material into the baler. Then, the crop material may be cut into smaller pieces by the cutting unit. As the crop material enters the bale chamber, multiple carrier elements, e.g. rollers, chains and slats, and/or belts, will begin to roll a bale of hay within the chamber. These carrier elements are movable so that the chamber can initially contract and subsequently expand to maintain an appropriate amount of pressure on the periphery of the bale. After the bale is formed and wrapped by the wrapping mechanism, the rear of the baler is configured to open for allowing the bale to be discharged onto the field.

In the case of a variable round baler, the bale chamber may include belts for forming the bale. The belts stay in contact with the bale to assist in forming and densifying the bale. The belts are wound around rolls positioned within the bale chamber. At least some of those rolls are positioned on a moveable serpentine arm. The arm moves between a home position prior to formation of the bale and a rotated position as the bale forms. Described herein is a serpentine arm that limits contact between adjacent belt loops (or belts).

### SUMMARY OF THE INVENTION

According to one example, a take-up or serpentine arm assembly for an agricultural baler is provided. The arm assembly is moveable between a first position corresponding to an empty bale chamber of the baler and a second position corresponding to an at least partially filled bale chamber of the baler. The arm assembly includes a primary arm having a first rotatable roll mounted thereto and a secondary arm having a second rotatable roll mounted thereto. The secondary arm is moveably connected to the primary arm, or vice versa, such that in the first position of the arm assembly, the second rotatable roll is positioned a first distance away from the first rotatable roll, and in the second position of the arm assembly, the second rotatable roll is positioned a second distance away from the first rotatable roll that is less than the first distance.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
FIG. 1 illustrates a perspective view of an exemplary embodiment of an agricultural baler including a bale chamber, provided in accordance with the present disclosure;
FIG. 2 illustrates a sectional view of the agricultural baler of FIG. 1;
FIG. 3 illustrates a sectional view of an alternative baler, which is similar to the baler of FIGs. 1 and 2. The sectional view of FIG. 3 is taken from the opposite side of a baler in comparison with the sectional view of FIG. 2. The serpentine arm of the baler of FIG. 3 is shown in a home position.
FIG. 4 illustrates a sectional view of a segment of another alternative baler, which is similar to the baler of FIG. 3. The serpentine arm of the baler of FIG. 4 is shown in a first (home) position corresponding to an empty bale chamber of the baler.
FIG. 5 illustrates the baler segment of FIG. 4, wherein the serpentine arm is shown rotated to a second position corresponding to an at least partially filled bale chamber of the baler.

Corresponding reference characters indicate corresponding parts throughout the several views. The exemplifications set out herein illustrate embodiments of the invention and such exemplifications are not to be construed as limiting the scope of the invention in any manner.

### DETAILED DESCRIPTION OF THE INVENTION

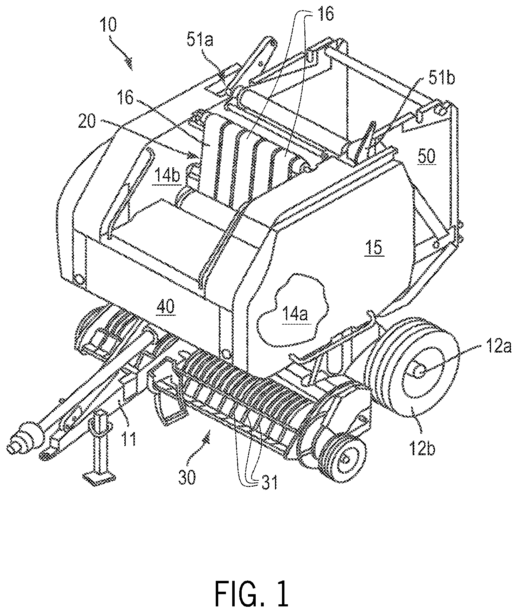

Referring now to the drawings, and more particularly to FIG. 1, an exemplary embodiment of an agricultural baler 10 is illustrated in the form of a variable chamber round baler. The baler 10 includes a chassis terminating forwardly in a tongue 11 and rearward slightly beyond a transverse axle 12a to which a pair of wheels 12b (only one shown) is mounted, thus forming a wheel supported chassis. The chassis supports a series of belts 16 and floor rolls, which together with a first sidewall 14*a* (shown in the breakout) behind and generally parallel to a cover panel 15 and a second sidewall 14b, collectively forming a portion of a bale chamber 20. It should be appreciated that the "belts" 16 described herein may also refers to chains or other similar elements. Cut crop material is picked up by tines 31 of a transverse pickup 30 and fed into the bale chamber 20 where it is formed into a cylindrically shaped bale by the series of belts 16. The bale is then optionally wrapped with twine or a net wrapping material dispensed from a wrapping mechanism generally behind shield 40. Upon completion of the optional wrapping process, the tailgate 50 pivots upwardly about pivot points 51*a,* 51*b* and the bale is discharged onto the ground.

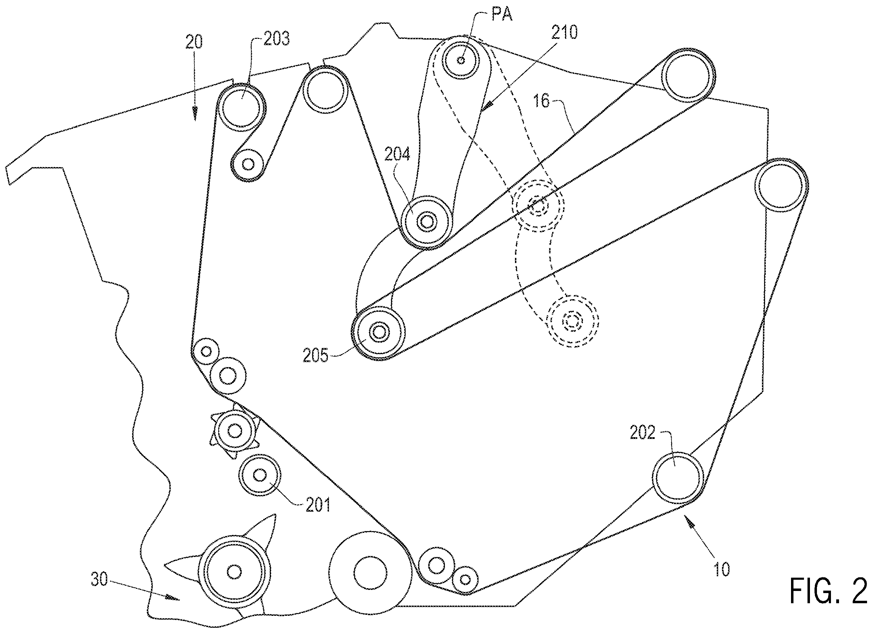

Turning now to FIG. 2, a sectional view of the baler 10 is illustrated. As can be seen, the belts 16 wrap around a plurality of rolls 202, 203, 204, 205 placed throughout the bale chamber 20. One of the rolls 201 may be a starter roll that rotates when coupled to a mechanical power source by a power take-off. The rolls 202 and 203 may be guide rolls that help guide the belts 16 within the bale chamber 20. Rolls 204 and 205 may be rolls that are formed as part of a movable serpentine arm 210, which is in contact with the belts 16 to keep the belts 16 taut. Serpentine arm 210 may also be referred to in the art as a take-up arm or tensioning arm. It should be appreciated that while the arm 210 is described herein as a "serpentine arm," the arm 210 does not need to have a serpentine shape. The term "serpentine arm" is commonly used in the art to describe such an arm regardless of the shape. The arm 210 rotates about a pivot axis PA between a home position (shown in solid lines) and a rotated position (shown in dashed lines).

The rolls of the arm 210 are in contact with the belts 16. The arm 210 is configured to move responsively to lifting by one or more of the belts 16. The belts 16 may lift on the serpentine arm 210 as the size of a forming bale grows. As the bale size grows, one or more of the belts 16 may lift on the serpentine arm 210 to move the serpentine arm 210 from the first (home) position (shown in solid lines) to the second, rotated position (shown in dashed lines). The serpentine arm 210 maintains contact with one or more of the belts 16 during movement between those positions to maintain tension in the contacted belt(s) 16 and reduce the risk of one or more belts 16 losing tension and mistracking. Further details of the arm 210 are provided in the '271 Patent.

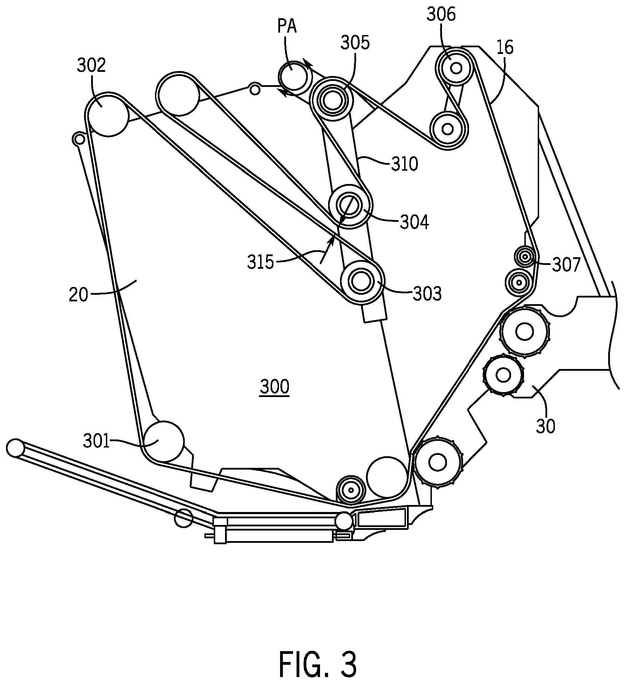

FIG. 3 depicts a sectional view of an alternative baler 300. Baler 300 is substantially similar to the baler shown in FIG. 2, and the primary differences therebetween will be described hereinafter. It should be understood that the sectional view of FIG. 3 is taken from the opposite side of a baler as compared with the sectional view of FIG. 2. Unless otherwise noted, the details of the baler shown in FIGs. 1 and 2 apply to the baler of FIG. 3.

The position and arrangement of the rolls 301-307 differs from that of the baler of FIG. 2. It is noted that baler includes additional rolls that are not numbered. The serpentine arm 310, which rotates about pivot axis PA, includes a single unitary arm and three rolls 303-305 mounted to that arm along a substantially straight line. The serpentine rolls 303-305 are mounted in fixed locations on the serpentine arm 310. Arm 310 may be a unitary member having two straight legs or portions that are separated by an obtuse internal angle. The legs are not rotatable relative to each other. Roll 305 is positioned at the intersection of those legs. Roll 303 is positioned at or near the free end of the longer leg, and roll 304 is positioned on that same leg at a distance from roll 305. The pivot axis PA is defined on the shorter leg, and that axis may be defined by a pin, post or fastener positioned through that shorter leg. The pin, post or fastener may be fixed to a frame of the baler or other stationary structure.

In operation, the slack of the belts 16 is taken up by the arm 310 when the bale chamber 20 grows. The arm 310 rotates about pivot axis PA through some angular motion away from roll 307 as the bale grows and provides resistance to the increasing bale size, thereby increasing the density of the bale. As the serpentine arm 310 rotates about pivot axis PA back to the home position (shown in FIG. 3) and takes-up the slack of the belts 16, the distance 315 between adjacent belts loops coming off of the serpentine mounted rolls 303 and 304 decreases, as evidenced by small distance 315 in FIG. 3. In a worst-case scenario, the belt loops (or belts) 16 could physical contact if the arm 310 rotates too far towards the home position. This scenario influences the design of the arm 310 and limits how far the serpentine arm 310 can rotate, thereby limiting the amount of belt 16 the arm 310 can take-up.

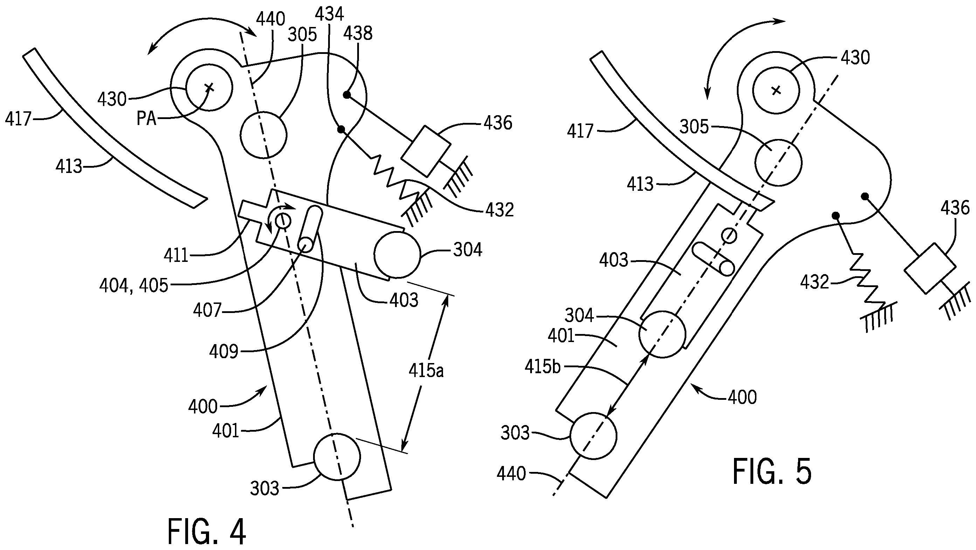

The baler of FIGs. 4 and 5 addresses the aforementioned shortcomings of baler 300. Turning now to FIGs. 4 and 5, baler is substantially similar to the baler 300 shown in FIG. 3, and only the primary differences therebetween will be described hereinafter. Unless otherwise noted, the details of the baler 300 shown in FIG. 3 apply to the baler of FIGs. 4 and 5.

The baler of FIGs. 4 and 5 includes a serpentine or take-up arm assembly 400. The arm assembly 400 is shown in a first (home) position in FIG. 4 corresponding to an empty or nearly empty bale chamber of the baler, and the arm assembly 400 is shown in a second (moved or rotated) position in FIG. 5 corresponding to a filled or at least partially filled bale chamber.

The arm assembly 400 includes a primary arm 401 that is pivotably connected with respect to a frame of the baler, and a secondary arm 403 that is pivotably connected to the primary arm 401. A tube 430 that is fixed to arm 401 defines the pivot axis PA of arm 400. Arm 400 rotates in the clockwise direction about pivot axis PA from the home (or first) position shown in FIG. 4 to a moved or rotated (or second) position shown in FIG. 5 as the bale grows within the bale chamber. Once the bale is ejected from the bale chamber, the arm 400 rotates in the counterclockwise direction back to the home position of FIG. 4 under the influence of spring 432. The arm 400 is biased in the counterclockwise direction by spring 432, one end of which is mounted to a stationary point on the baler and the other end 434 of which is fixed to arm 401 at a distance from the pivot axis PA. The arm 400 can also be moved in either a clockwise or counterclockwise direction by an actuator 436, one end of which is mounted at a stationary point on the baler and the other end 438 of which is fixed to arm 401 at a distance from the pivot axis PA. It should be understood that the location of spring 432 and actuator 436 may vary, and the spring 432 and/or the actuator 436 may be omitted if so desired. While the spring 432 and actuator 436 are shown mounted to the primary arm 401 it should be understood that those components could be connected to another component that is responsible for moving the primary arm 401. In other words, the spring 432 and actuator 436 may not be directly mounted to primary arm 401, as shown.

The lower and upper rolls 303 and 305 are rotatably mounted to primary arm 401 about their respective axes, and the central roll 304 is rotatably mounted to the secondary arm 403 about its axis. The secondary arm 403 is pivotably mounted to the primary arm 401 by a shaft, fastener or pin 404. Secondary arm 403 is configured to pivot about the pinned interface at 404. A torsion spring 405 may be wound around the pin 404 and in contact with both the arms 401 and 403 to bias the secondary arm 403 in the counterclockwise direction relative to arm 401, as viewed in FIG. 4. Another pin 407 may be fixed to the primary arm 401. The pin 407 is positioned within an elongated channel or slot 409 defined in arm 403. Interaction between the pin 407 and slot 409 delimits rotation of arm 403. It should be understood that the locations of pin and slot may be swapped. Also, pin 407 and/or slot 409 may be omitted, if so desired.

Arm 403 has a tab 411 extending from the top end thereof. Tab 411 is configured to interact with a stationary surface, slot or track 413 disposed on the frame or housing of the baler (for example) or other stationary surface on the baler. In operation, as primary arm 401 rotates in the clockwise direction about pivot axis PA from the first (home) position of FIG. 4 towards the second (rotated or moved) position of FIG. 5, the tab 411 of arm 403 physically contacts track 413. Engagement between tab 411 and track 413 causes arm 403 to rotate in the clockwise direction about pin 404 (and against the bias of spring 405) until the pin 407 contacts the right-hand side of slot 409.

In the second position of arm 400 shown in FIG. 5, the rolls 303-305 may be substantially aligned along a common axis 440 extending between rolls 303 and 305, such that the distance or gap 415b between rolls 303 and 304 is a first value. This arrangement of the rolls 303-305 results in a maximum volume of the baling chamber for baling purposes. In the first (home) position of arm 400, which is shown in FIG. 4, the rolls 303-305 are not aligned along axis 440 and the distance or gap 415a between rolls 303 and 304 is a second value that is greater than the first value of gap 415b. Stated differently, the roll 304 is positioned further from roll 303 in the first home position than in the second rotated position. Accordingly, the loops of the belt 16 wound around the rolls 303 and 304 in FIG. 4 (belt not shown in FIG. 4) are less likely to contact each other in the first (home) position of the arm 400.

The structure of arm 400 may vary from that which is shown and described. For example, instead of arm 403 moving relative to arm 401, the opposite could occur. The pinned connections, pin and slot arrangements and springs could vary in number or location without departing from the scope or spirit of the invention.

The track 413 may vary from that which is shown and described. The edge 417 of track 413, which engages with tab 411, is curved, and may take another shape to time motion of arm 403 about pin 404 as arm assembly 400 moves between the first and second positions. Track 413 and tab 411 may also be referred to as a cam and cam follower, respectively.

The arm assembly 400 may include, at a minimum, the primary arm 401, the secondary arm 403, the roll 304 and at least one of the rolls 303 and 305. The arm assembly 400 may also be said to constitute the spring 432, actuator 436, and/or the belts wrapped around rolls 303-305.

## Claims

1. An arm assembly (400) for an agricultural baler (10), which arm assembly (400) is moveable between a first position corresponding to an empty bale chamber (20) of the baler and a second position corresponding to an at least partially filled bale chamber (20) of the baler, said arm assembly comprising:
a primary arm (401) having a first rotatable roll (303) mounted thereto, wherein a belt (16) can be wrapped around the first rotatable roll (303), and
a secondary arm (403) having a second rotatable roll (304) mounted thereto, wherein the belt or another belt can be wrapped around the second rotatable roll (304),
**characterized in that** the secondary arm (403) being moveably connected to the primary arm (401), or vice versa, such that in the first position of the arm assembly (400), the second rotatable roll (304) is positioned a first distance (415a) away from the first rotatable roll (303), and in the second position of the arm assembly (400), the second rotatable roll (304) is positioned a second distance (415b) away from the first rotatable roll (303) that is less than the first distance.

2. The arm assembly (400) according to claim 1, further comprising a spring (432) mounted either directly or indirectly to the primary arm (401) for biasing the arm assembly (400) toward the first position.

3. The arm assembly (400) according to any of the preceding claims, further comprising an actuator (436) mounted either directly or indirectly to the primary arm (401) for moving the arm assembly (400) between the first and second positions.

4. The arm assembly (400) according to any of the preceding claims, wherein in the first position of the arm assembly (400), the first rotatable roll (303) is positioned at a higher elevation within the bale chamber (20) than the second rotatable roll (304).

5. The arm assembly (400) according to any of the preceding claims, wherein the secondary arm (403) is pivotably mounted to the primary arm (401) by a pin (404), and wherein the secondary arm (403) is movable between (i) a first secondary arm position corresponding to the first position of the arm assembly and (ii) a second secondary arm position corresponding to the second position of the arm assembly.

6. The arm assembly (400) according to claim 5, further comprising a spring (405) that biases the secondary arm to the first secondary arm position.

7. The arm assembly (400) according to claim 5 or 6, wherein the secondary arm (403) includes one of a cam (417) and a cam follower (411) that is configured to interact with the other of the cam and the cam follower (411) to cause motion of the secondary arm (403) from the first secondary arm position to the second secondary arm position.

8. The arm assembly (400) according to claim 7, wherein either the cam or the cam follower (411) is disposed on a stationary surface of the baler.

9. The arm assembly (400) according to any of the preceding claims, wherein the primary arm (401) includes a third rotatable roll (305), and wherein an axis or an imaginary line (440) extends between the first rotatable roll (303) and the third rotatable roll (305).

10. The arm assembly (400) according to claim 9, wherein, in the first position of the arm assembly, the second rotatable roll (304) is positioned further from the axis (400) as compared with the second position of the arm assembly.

11. The arm assembly according to claim 10, wherein, in the second position of the arm assembly, the second rotatable roll (304) is aligned with the axis (440), and, in the first position of the arm assembly, the second rotatable roll (304) is mis-aligned with the axis (440).

12. An agricultural baler (10) comprising the arm assembly (400) of any of the preceding claims.

13. The agricultural baler according to claim 12, wherein the secondary arm (403) is pivotably mounted to the primary arm (401) by a pin (404), and wherein the secondary arm (403) is movable between (i) a first secondary arm position corresponding to the first position of the arm assembly and (ii) a second secondary arm position corresponding to the second position of the arm assembly.

14. The agricultural baler (10) according to claim 13, further comprising a spring (405) that biases the secondary arm (403) to the first secondary arm position.

15. The agricultural baler (10) according to claim 13 or 14, wherein the secondary arm (403) includes a cam follower (411) that is configured to interact with a stationary cam (417) disposed on a stationary surface of the baler to cause motion of the secondary arm (403) from the first secondary arm position to the second secondary arm position.
